# EUROPEAN PATENT APPLICATION

(11) **EP 4 686 661 A1**
(43) Date of publication of application: **04.02.2026**
(21) Application number: 25188463.1
(22) Date of filing: 09.07.2025
(51) Int. Cl.: B65B 35/36, B65B 5/00, B65B 35/44, B65G 47/31, B65G 47/90

(54) **SYSTEM AND METHOD FOR BOXING PRODUCTS**

(30) Priority: 31.07.2024 IT 202400017800
(71) Applicant: Fameccanica.Data S.p.A., 66020 San Giovanni Teatino (CH) (IT)
(72) Inventor: GALANTE, Dario, I-66020 San Giovanni Teatino (Chieti) (IT); FAIETA, Fabrizio, I-66020 San Giovanni Teatino (Chieti) (IT); TORRETTI, Anthony Daniel, I-66020 San Giovanni Teatino (Chieti) (IT)
(74) Representative: Buzzi, Notaro & Antonielli d'Oulx S.p.A.

(57) **Abstract**

A system (10) for boxing products (P), comprising:
- a transfer line (20) configured to transfer products (P) from a product output section (14) of a production machine (12) to a product input section (18) of a boxing machine (16), and
- means for varying the pitch (X) between products (P) on the transfer line (20) so as to form empty spaces (ES) having respective lengths (L') in the transport direction (A) equal to or greater than the length (L) of said products.

## Description

### Field of the invention

The present invention relates to a system and method for boxing products.

The invention was developed particularly for application in the field of absorbent sanitary article production, more specifically in the field of boxing packages of absorbent sanitary articles coming from a production machine.

However, the invention is not limited to this specific field and can be used in all cases where it is necessary to box products coming from the output of a production line.

### Prior art

Systems for boxing products at the end of a production line represent a crucial element in industrial automation. These systems, often equipped with advanced robotic technology, are designed to ensure efficiency and precision in product packaging. Using automatic handling units equipped with anthropomorphic robots or similar, these systems can handle a wide range of product sizes and types, adapting to the specific needs of each customer. Customization is a fundamental aspect, allowing the systems to be configured to handle variable production volumes and optimally respond to market dynamics. The efficiency of these systems translates into significant productivity improvement and the ability to quickly respond to changes in production needs.

These systems use robotic boxing machines designed and built to allow vertical filling of boxes with previously formed product groups, wherein the products within the groups are arranged with a predetermined orientation determined to optimally exploit the box volume.

A boxing machine may include: a product group conveyor, a first robotic unit to form product groups on the product group conveyor, and a second robotic unit to pick up product groups from the product group conveyor and insert the product groups into respective boxes. An example of a robotic boxing machine is described in EP2096035A1.

Typically, a boxing machine is associated with a feed conveyor configured to feed the boxing machine with an array of products aligned with each other in the transport direction. In the array, the products are arranged with constant relative distances, so as to form at the input of the boxing machine a product flow with a regular cadence.

In many cases, the production machine and the boxing machine have different throughputs. In most cases, the boxing machine has a throughput, expressed in number of boxed products per time unit (e.g. 1 minute), greater than the throughput of the production machine, expressed in number of formed products per time unit.

Systems for feeding boxing machines usually include a buffer that serves to accumulate products coming from the production line in case of temporary stops or slowdowns of the boxing machine.

In these systems, there is a need to empty the buffer before it reaches a saturation state. Indeed, if the buffer reaches a complete saturation state, a temporary stop or slowdown of the boxing machine forces the production machine to stop or slow down, which results in a loss of system efficiency.

The products accumulated in the buffer are used to feed the boxing machine in case of stops or slowdowns of the production machine. However, the production machine is usually less subject to stops or slowdowns than the boxing machine. In traditional solutions, to prevent the buffer from reaching a complete saturation state, it may be necessary to slow down the production machine solely to empty the buffer, which results in a loss of system efficiency.

### Object and summary of the invention

The object of the present invention is to provide a system and method for boxing products that solves the problems of the prior art.

In particular, the object of the present invention is to provide a system for boxing products that allows periodic emptying of the buffer even in the absence of stops or slowdowns of the production machine.

According to the present invention, this object is achieved by a system for boxing products having the features forming the subject of claim 1.

According to another aspect, the invention relates to a method for boxing products having the features forming the subject of claim 6.

Preferred embodiments form the subject of the dependent claims.

### Brief description of the drawings

The present invention will now be described in detail with reference to the accompanying drawings, given by way of non-limiting example, wherein:
- Figures 1-3 are schematic plan views illustrating different operating phases of a first embodiment of a system for boxing products according to the present invention,
- Figure 4 is a schematic plan view of a second embodiment of a system according to the present invention,
- Figures 5 and 6 are schematic side views illustrating two operating phases of a third embodiment of a system according to the present invention, and
- Figure 7 is a schematic view illustrating an embodiment of a grouping device usable in the system of Figures 5 and 6.

### Detailed description

With reference to the figures, 10 schematically indicates a system for boxing products P. The products P may be packages of absorbent sanitary articles enclosed in flexible bags.

The system 10 includes a production machine 12 having a product output section 14 from which products P exit aligned with each other in a continuously moving array.

The system 10 includes a boxing machine 16 having a product input section 18. The boxing machine 16 is configured to receive products P advancing in a continuous array, to form product groups, and to arrange the product groups in cardboard boxes.

The system 10 includes a transfer line 20 configured to transfer the products P in a transport direction A from the product output section 14 of the production machine 12 to the product input section 18 of the boxing machine 16.

The system 10 includes a buffer 22 configured to accumulate products P coming from the production machine 12 during stops or slowdowns of the boxing machine 16.

As will be better described below, the system 10 includes means for varying the pitch between products P on the transfer line 20 so as to form on the transfer line 20 empty spaces ES having respective lengths L' in the transport direction X equal to or greater than the length L of products P.

The system 10 further includes a manipulator 38 configured to pick up products P from the buffer 22 and deposit the products P picked up from the buffer 22 in respective empty spaces ES formed on the transfer line 20.

The transfer line 20 includes a first conveyor 24 that receives products P from the product output section 14 of the production machine 12. The first conveyor 24 is driven at a first speed V1 and is configured to advance products P in the transport direction A with a first pitch X1. The transfer line 20 includes a second conveyor 26 configured to receive products P from the output of the first conveyor 24. The second conveyor 26 is driven at a second speed V2 greater than the first speed V1. The fact that the speed V2 of the second conveyor 26 is greater than the first speed V1 of the first conveyor 24 causes the products P on the second conveyor 26 to have a second pitch X2 greater than the first pitch X1.

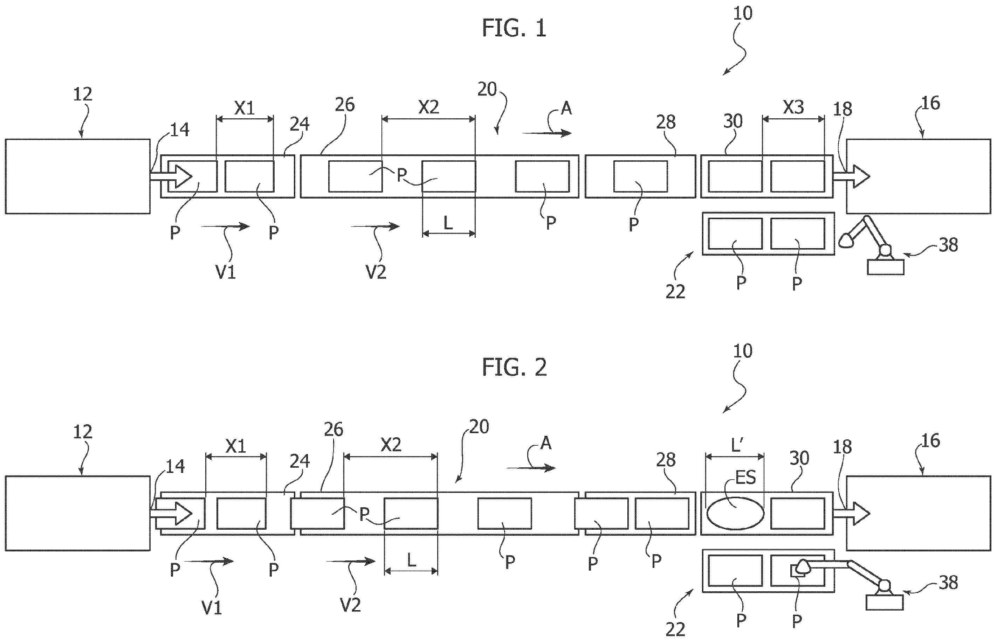

In the embodiment of Figures 1-3, the transfer line 20 includes a third conveyor 28 configured to receive products P from the second conveyor 26 and a fourth conveyor 30 disposed at the output of the third conveyor 28. The third conveyor 28 is selectively driven at variable speed to selectively form empty spaces ES on the fourth conveyor 30. In particular, the third conveyor 28 slows down when receiving a product P to form an empty space ES on the fourth conveyor 30 then accelerates to arrange the products P on the fourth conveyor with a desired pitch.

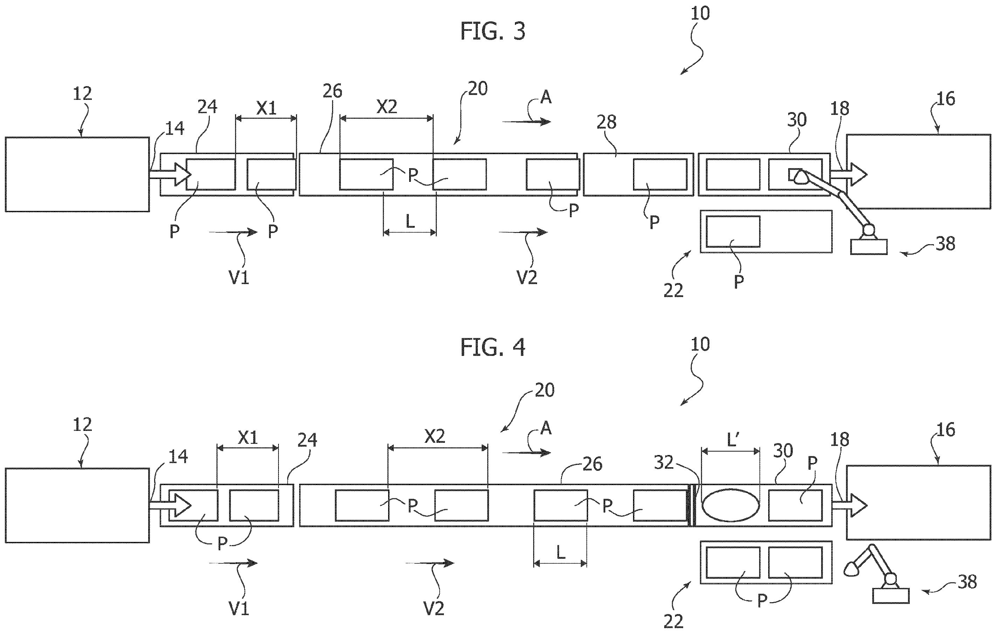

With reference to Figure 4, in a second embodiment the transfer line 20 includes a barrier element 32 controlled by an actuator and movable between a disengaged position and a stop position. The barrier element 32 is configured to selectively stop products P on the second conveyor 26 so as to selectively form empty spaces ES on the second conveyor 26 downstream of the barrier element 32. When the barrier element 32 is in the stop position, the product P that comes into contact with the barrier element 32 stops. The second conveyor 26 slides relative to the product P that is in contact with the barrier element 32. After an empty space with a length L' greater than the length of products P has formed downstream of the barrier element 32, the barrier element 32 is moved to the disengaged position and the products P continue to advance on the second conveyor 26 at speed V2 and with pitch X2.

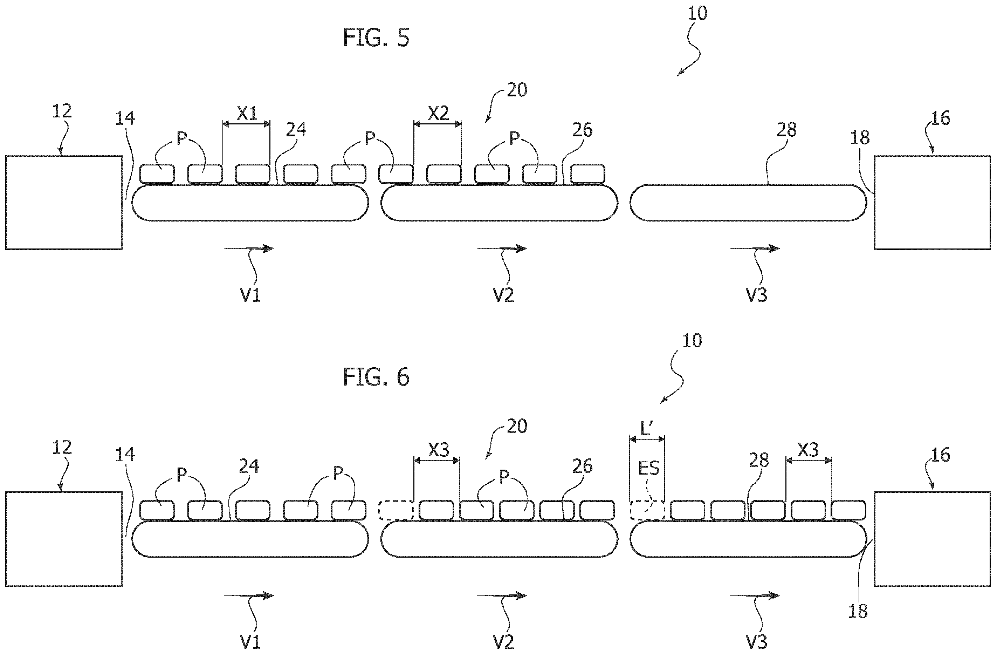

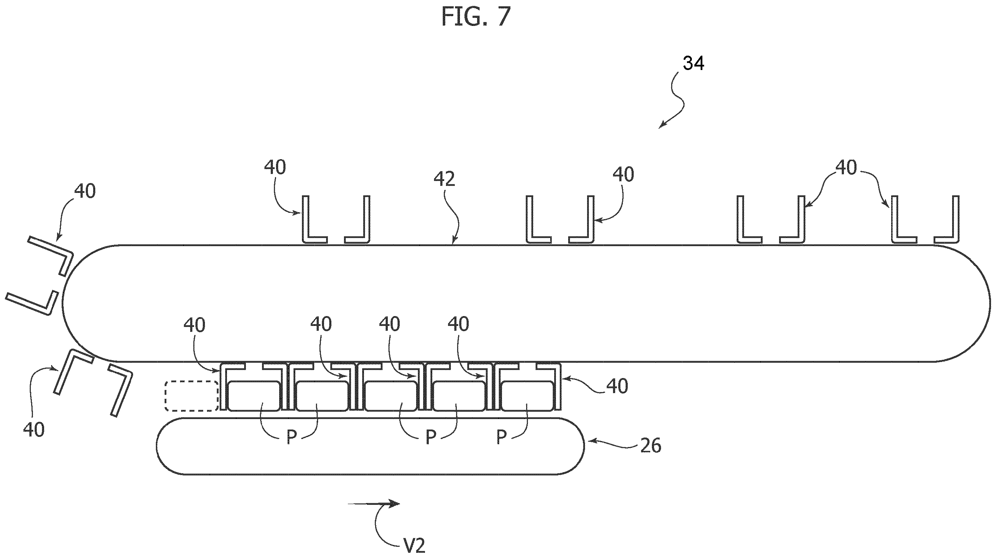

Figures 5-7 illustrate a third embodiment of a system according to the present invention. Elements corresponding to those previously described are indicated with the same references. In this embodiment, the transfer line 20 includes a grouping device 34 (Figure 7) configured to engage a group of products P moving along the second conveyor 26 and to arrange the products P of such group with a third pitch X3 smaller than the second pitch X2. In this way, empty spaces ES are formed on the second conveyor 26 between successive groups of products P. With reference to Figure 7, the grouping device 34 may include a plurality of engagement elements 40, each of which is configured to engage a respective product P. The engagement elements 40 can move independently of each other along a guide 42 extending along a closed path. The guide 42 may have a straight branch parallel to the transport direction A. The engagement elements 40 engage the products P moving along the second conveyor 26 and slow them down to bring them closer together. The second conveyor 26 slides relative to the products engaged by the engagement elements 40. The slowing down of the products relative to the second conveyor 26 periodically forms empty spaces ES. When the engagement elements 40 disengage from their respective products P, the products move on the second conveyor 26 with a pitch X3. The manipulator 38 fills the empty spaces ES with products picked up from the buffer 22 as in the previously described embodiments.

The system according to the present invention in operation implements a method for boxing products P, comprising:
- providing a production machine 12 having a product output section 14,
- providing a boxing machine 16 having a product input section 18,
- transferring the products P in a transport direction A from the product output section 14 of the production machine 12 to the product input section 18 of the boxing machine 16 via a transfer line 20,
- accumulating in a buffer 22 products P coming from the production machine 12 during stops or slowdowns of the boxing machine 16,
- varying the pitch between products P moving along the transfer line 20 so as to form along the transfer line 20 empty spaces ES having respective lengths L' in the transport direction A equal to or greater than the length L of products P, and
- picking up products P from the buffer 22 and depositing the products P picked up from the buffer 22 in respective empty spaces ES formed on the transfer line 20.

The method may comprise advancing products P with a first pitch X1 on a first conveyor 24 driven at a first speed V1, transferring the products P from the first conveyor 24 to a second conveyor 26 driven at a second speed V2 greater than the first speed V1 so that the products P on the second conveyor 26 are arranged with a second pitch X2 greater than the first pitch X1.

The method may comprise transferring products P from the second conveyor 26 to a third conveyor 28 selectively driven at variable speed, and selectively forming said empty spaces ES on a fourth conveyor 30 disposed at the output of the third conveyor 28.

In one possible embodiment, the method may comprise selectively stopping products P on said second conveyor 26 by a barrier element 32 and selectively forming an empty space ES on said second conveyor 26 downstream of said barrier element 32.

In one possible embodiment, the method may comprise engaging a group of products P moving along said second conveyor 26 and arranging the products P of said group with a third pitch X3 smaller than the second pitch X2, so as to form empty spaces ES between successive groups of products P.

The formation of empty spaces ES along the array of products P moving in the transport direction A allows using the products P accumulated in the buffer 22 to place the products picked from the buffer in respective empty spaces ES. This allows emptying the buffer 22 even in the absence of stops or slowdowns of the production machine and enables the system to operate constantly at the maximum speed of the production machine.

Naturally, while maintaining the principle of the invention, the construction details and embodiments may be widely varied without thereby departing from the scope of the invention as defined by the following claims.

## Claims

1. A system (10) for boxing products (P), comprising:
- a production machine (12) having a product output section (14),
- a boxing machine (16) having a product input section (18),
- a transfer line (20) configured to transfer said products (P) in a transport direction (A) from said product output section (14) of the production machine (12) to said product input section (18) of the boxing machine (16),
- a buffer (22) configured to accumulate products (P) coming from said production machine (12) during stops or slowdowns of said boxing machine (16),
- means for varying the pitch between products (P) on said transfer line (20) so as to form on said transfer line (20) empty spaces (ES) having respective lengths (L') in the transport direction (A) equal to or greater than the length (L) of said products (P), and
- a manipulator (38) configured to pick up products (P) from said buffer (22) and deposit the products (P) picked up from said buffer (22) in respective empty spaces (ES) formed on said transfer line (20).

2. The system of claim 1, wherein said transfer line (20) comprises a first conveyor (24) driven at a first speed (V1) and configured to advance products (P) in the transport direction (A) with a first pitch (X1), and a second conveyor (26) driven at a second speed (V2) greater than said first speed (V1) configured to receive the products (P) from the output of the first conveyor (24), so that the products (P) on the second conveyor (26) have a second pitch (X2) greater than said first pitch (X1).

3. The system of claim 2, wherein said transfer line (20) comprises a third conveyor (28) configured to receive the products (P) from the second conveyor (26), and a fourth conveyor (30) disposed at the output of the third conveyor (28), wherein the third conveyor (28) is selectively driven at variable speed to selectively form empty spaces (ES) on said fourth conveyor (30).

4. The system of claim 3, comprising a barrier element (32) configured to selectively stop products (P) on said second conveyor (26) so as to selectively form empty spaces (ES) on said second conveyor (26) downstream of said barrier element (32).

5. The system of claim 3, comprising a grouping device (34) configured to engage a group of products (P) moving along said second conveyor (26) and to arrange the products (P) of said group with a third pitch (X3) smaller than said second pitch (X2), so as to form empty spaces (ES) between successive groups of products (P).

6. A method for boxing products (P), comprising:
- providing a production machine (12) having a product output section (14),
- providing a boxing machine (16) having a product input section (18),
- transferring said products (P) in a transport direction (A) from said product output section (14) of the production machine (12) to said product input section (18) of the boxing machine (16) via a transfer line (20),
- accumulating in a buffer (22) products (P) coming from said production machine (12) during stops or slowdowns of said boxing machine (16),
- varying the pitch between products (P) on said transfer line (20) so as to form on said transfer line (20) empty spaces (ES) having respective lengths (L') in the transport direction (A) equal to or greater than the length (L) of said products (P), and
- picking up products (P) from said buffer (22) and depositing products (P) picked up from said buffer (22) in respective empty spaces (ES) formed on said transfer line (20).

7. The method of claim 6, comprising advancing products (P) with a first pitch (X1) on a first conveyor (24) driven at a first speed (V1), transferring products (P) from the first conveyor (24) to a second conveyor (26) driven at a second speed (V2) greater than said first speed (V1) so that the products (P) on the second conveyor (26) have a second pitch (X2) greater than said first pitch (X1).

8. The method of claim 7, comprising transferring products (P) from the second conveyor (26) to a third conveyor (28) selectively driven at variable speed, and selectively forming said empty spaces (ES) on a fourth conveyor (30) disposed at the output of the third conveyor (28).

9. The method of claim 7, comprising selectively stopping a product (P) on said second conveyor (26) by a barrier element (32) and selectively forming an empty space (ES) on said second conveyor (26) downstream of said barrier element (32).

10. The method of claim 7, comprising engaging a group of products (P) moving along said second conveyor (26) by a grouping device (34) and arranging the products (P) of said group with a third pitch (X3) smaller than said second pitch (X2), so as to form empty spaces (ES) between successive groups of products (P).
